Europäisches Patentamt

European Patent Office

Office européen des brevets

(11) Veröffentlichungsnummer: **0 414 057 A2**

# (12) EUROPÄISCHE PATENTANMELDUNG

(21) Anmeldenummer: 90115339.5

(22) Anmeldetag: 10.08.90

(51) Int. Cl.5: **G01C 19/38**

(30) Priorität: 24.08.89 DE 3927920

(43) Veröffentlichungstag der Anmeldung:
27.02.91 Patentblatt 91/09

(84) Benannte Vertragsstaaten:
**DE ES FR GB IT**

(71) Anmelder: **Bodenseewerk Gerätetechnik GmbH**
**Alte Nussdorfer Strasse 15 Postfach 1120**
**D-7770 Überlingen/Bodensee(DE)**

(72) Erfinder: **Krogmann, Uwe**

Zur Asche 24
D-7770 Überlingen/Nussdorf(DE)
Erfinder: **Kempas, Hagen**
**Kreuzstrasse 25A**
**D-7770 Überlingen 12(DE)**

(74) Vertreter: **Wolgast, Rudolf, Dipl.-Chem. Dr. et al**
**Dipl.-Phys. Jürgen Weisse Dipl.Chem. Dr.**
**Rudolf Wolgast Bökenbusch 41 Postfach 11 03 86**
**D-5620 Velbert 11 Langenberg(DE)**

(54) Verfahren zur Eliminierung von Kreiselfehlern.

(57) Zur Eliminierung von Kreiselfehlern bei elektrisch gefesselten, zweiachsigen Kreiseln, bei denen auf jeder Eingangsachse (X,Y) ein Abgriff (52,54) und ein Drehmomenterzeuger (46,48) angeordnet sind und jeder auf einer Eingangsachse angeordnete Abgriff (52,54) den auf der anderen Eingangsachse angeordneten Drehmomenterzeuger (48,46) beaufschlagt, erfolgt eine erste Messung bei einer ersten Drehrichtung des Kreiselrotors (42). Anschließend wird bei einer zweiten Messung die Drehrichtung des Kreiselrotors (42) umgekehrt und gleichzeitig die Polarität der Signale der Abgriffe (52,54) umgeschaltet. Ein Meßwert wird aus den bei den beiden Messungen erhaltenen Kreiselsignalen gebildet.

Fig.1

## TECHNISCHES GEBIET

Die Erfindung betrifft ein Verfahren zur Eliminierung von Kreiselfehlern bei elektrisch gefesselten, zweiachsigen Kreiseln, bei denen auf jeder Eingangsachse ein Abgriff und ein Drehmomenterzeuger angeordnet sind und jeder auf einer Eingangsachse angeordnete Abgriff den auf der anderen Eingangsachse angeordneten Drehmomenterzeuger beaufschlagt.

## Zugrundeliegender Stand der Technik

Es sind elektrisch gefesselte, zweiachsige Kreisel bekannt. Diese Kreisel haben einen Kreiselrotor, der um eine Drallachse umläuft. Die Drallachse ist gegenüber einem Gehäuse mit zwei Freiheitsgraden um zwei zueinander und zu der Drallachse senkrechte Eingangsachsen winkelbeweglich. Auf jeder der Eingangsachsen sitzt ein Abgriff, der auf eine Auslenkung des Kreiselrotors um diese Eingangsachse anspricht, und ein Drehmomenterzeuger, über den ein Drehmoment auf den Kreiselrotor um die Eingangsachse ausübbar ist. Das Signal jedes der beiden Abgriffe beaufschlagt den auf der jeweils anderen Eingangsachse sitzenden Drehmomenterzeuger Dessen Drehmoment wirkt nach den Kreiselgesetzen der das Signal des Abgriffs verursachenden Auslenkung des Kreiselrotors entgegen. Dadurch wird der Kreiselrotor um beide Eingangsachsen elektrisch an eine Mittellage gefesselt. Solche elektrisch gefesselten zweiachsigen Kreisel sind in der DE-B-29 03 282, der DE-A-30 33 281 und der EP-A-0 251 157 beschrieben.

Bei solchen Kreiseln treten systematische Fehler auf. Durch die DE-C2-29 22 411 ist es bekannt, solche systematischen Fehler wenigstens teilweise dadurch zu eliminieren, daß mit einem Kreisel zwei Messungen bei zwei um 180° um eine der Eingangsachsen winkelversetzten Stellungen des Kreisels durchzuführen. Es ist auch bekannt, mit einem Kreisel in drei Winkelstellungen um eine Eingangsachse des Kreisels zu messen, die jeweils um 90° gegeneinander versetzt sind (DE-A-29 22 412).

Durch die DE-C2-31 43 527 und die US-A-4 461 089 ist es weiter bekannt, zur Eliminierung von bestimmten Kreiselfehlern in zwei um 180° um die Drallachse gegeneinander winkelversetzten Stellungen des Kreisels zu messen und die Differenz der Meßwerte zu bilden. Dabei ist die Drallachse vertikal angeordnet. Ein Nordwinkel wird aus dem Verhältnis der Differenzen der auf die beiden Drehmomenterzeuger geschalteten Signale bestimmt.

Die EP-A2-0 263 777 zeigt ein integriertes redundantes Referenzsystem für die Flugregelung und zur Erzeugung von Kurs- und Lageinformationen Dabei ist eine Mehrzahl von elektrisch gefesselten, zweiachsigen Kreiseln flugzeugfest so angeordnet, daß sie Winkelgeschwindigkeits-Informationnen redundant liefern. Eine Mehrzahl von Beschleunigungsmessern liefert entsprechend redundante Beschleunigungs-Informationen. Es sind Signalverarbeitungsmittel vorgesehen, durch welche fehlerhafte Winkelgeschwindig keits- und Beschleunigungs-Informationen eliminiert werden. Die so fehlerbereinigten Winkelgeschwindigkeits- und Beschleunigungs-Informationen liefern Stabilisierungssignale für den Flugregler. Weiterhin werden aus diesen fehlerbereinigten Winkelgeschwindigkeits- und Beschleunigungs-Informationen Kurs- und Lagereferenzsignale erzeugt.

Bei dem Referenzsystem nach der EP-A2-0 263 777 erfolgt eine Grobausrichtung und anschließend eine Feinausrichtung des Systems. Gewchwindigkeitsinkrement-Signale von den Beschleunigungsmessern werden nach einer Richtungskosinusmatrix aus dem systemfesten Koordinatensystem in ein erdfestes Koordinatensystem transformiert. Die transformierten Geschwindigkeitsinkrement-Signale beaufschlagen ein Kalman-Filter, welches den Einfluß der Erddrehung auf die Winkelgeschwindigkeits-Sensoren nachbildet und erddrehungsabhängige Stellsignale für die Kurs- und Lagekorrektur erzeugt, wenn das durch die Richtungskosinusmatrix definierte Koordinatensystem von dem erdfesten Koordinatensystem abweicht.

Die DE-A-31 01 828 betrifft ein Verfahren zur Bestimmung der Nullpunktfehler eines einachsigen Wendekreisels. Zur Bestimmung des Nullpunktfehlers und insbesondere zur Ermittlung des Winkels zwischen einer Bezugsachse und geographisch Nord werden die Ausgangssignale des Wendekreisels bei verschiedenen Drehzahlen des Kreiselrotors gemessen, Durch eine rechnerische Verknüpfung der Meßergebnisse wird die Summe aller Nullpunktfehler bestimmt.

Die DE-C2-32 13 720 beschreibt eine dynamisch abgestimmte Kardanaufhängung mit zwei Freiheitsgraden für einen Kreiselrotor.

## Offenbarung der Erfindung

Der Erfindung liegt die Aufgabe zugrunde, Kreiselfehler bei einem elektrisch gefesselten, zweiachsigen Kreisel auf einfache Weise zu eliminieren.

Der Erfindung liegt weiter die Aufgabe zugrunde, die Eliminierung von Kreiselfehlern bei redundant vorgesehenen Kreiseln so zu bewerkstelligen, daß die die Fehlertoleranz der Kreiselanordnung dadurch nicht beeinträchtigt wird.

Das Verfahren nach der Erfindung besteht darin, daß

(a) eine erste Messung bei einer ersten Drehrichtung des Kreiselrotors erfolgt,

(b) anschließend bei einer zweiten Messung die Drehrichtung des Kreiselrotors umgekehrt und gleichzeitig die Polarität der Abgriffe umgeschaltet wird und

(c) ein Meßwert unter Benutzung der bei den beiden Messungen erhaltenen Kreiselsignale gebildet wird.

Es ist dann nicht mehr erforderlich, den Kreisel selbst körperlich zu verdrehen. Es ist vielmehr nur eine elektrische Umschaltung erforderlich: Einmal wird die Drehrichtung umgekehrt. Das wirkt sich hinsichtlich der zu eliminierenden Kreiselfehler aus wie eine Verdrehung des Kreisels um 180° um seine Drallachse. Zum anderen muß dementsprechend die Polarität der Abgriffe umgekehrt werden, weil sich ja durch die Drehrichtungsumkehr auch die Richtung der durch ein bestimmtes Drehmoment hervorgerufenen Präzession umkehrt.

Die Erfindung ist nachstehend an einem Ausführungsbeispiel unter Bezugnahme auf die zugehörigen Zeichnungen näher erläutert.

## Kurze Beschreibung der Zeichnungen

Fig.1 zeigt einen Längsschnitt eines Kreisels der hier verwendeten Art.

Fig.2 ist ein Blockdiagramm und veranschaulicht die elektrische Fesselung des Kreisels und die Umschaltung der Abgriffsignale.

Fig.3 ist eine perspektivische Darstellung und zeigt die redundante Anordnung von Kreiseln bei einem Referenzsystem für die Flugregelung und die Erzeugung von Kurs- und Lageinformationen.

Fig.4 ist ein Blockdiagramm und veranschaulicht die Ausrichtung eines Referenzsystems mit einem Kreisel nach Fig.1 und 2.

Fig.5 ist eine schematische, perspektivische Darstellung und zeigt eine abgewandelte Art der Eliminierung von Kreiselfehlern.

Fig.6 ist eine weitere Abwandlung der Ausführung nach Fig.5.

## Bevorzugte Ausführungen der Erfindung

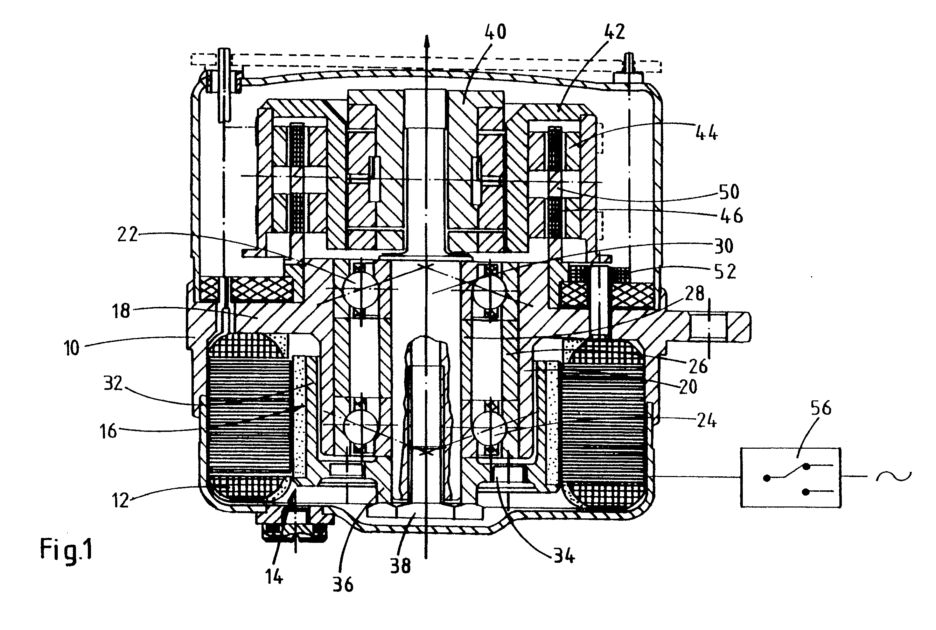

In Fig. 1 ist der mechanische Aufbau eines elektrisch gefesselten, zweiachsigen Kreisels dargestellt. Es handelt sich dabei um einen dynamisch abgestimmten Kreisel. Bei einem solchen Kreisel wird der Kreiselrotor von einem Antriebsmotor über ein Kardangelenk angetrieben. Das Kardangelenk weist einen Kardanrahmen und Kreuzfedergelenke auf. Die Kreuzfedergelenke üben infolge ihrer Federkraft Rückstellmomente auf den Kreiselrotor aus. Der Kardanrahmen erzeugt ebenfalls dynamische Momente. Die Anordnung ist dynamisch so abgestimmt, daß sich diese Störmomente kompensieren und der Kreiselrotor so umläuft, als sei er vollständig frei beweglich. Dieser Kreiselrotor ist dann elektrisch an eine Mittellage gefesselt. Die bei dieser Fesselung auf die Drehmomenterzeuger aufgeschalteten Ströme sind ein Maß für die Drehgeschwindigkeiten um die Eingangsachsen.

Mit 10 ist ein Gehäuse des Kreisels bezeichnet. In dem Gehäuse sitzt der Stator 12 eines Antriebsmotors 14. Der Rotor des Antriebsmotors 14 ist mit 16 bezeichnet.

An das Gehäuse 10 ist eine ringscheibenförmige Trennwand 18 angeformt. Am Innenrand der Trennwand 18 ist ein hülsenförmiger Gehäuseteil 20 angeformt. In dem hülsenförmigen Gehäuseteil 20 sitzen zwei Kugellager 22 und 24, die durch eine Abstandshülsen 26 und 28 im Abstand voneinander gehalten werden. In den Kugellagern ist eine Welle 30 gelagert. Die Abstandshülse 28 sitzt auf der Welle 30 zwischen den Innenringen der Kugellager 26 und 28. Der Rotor 16 des Antriebsmotors 14 weist einen hülsenförmigen Rotorteil 32 auf, der zwischen Stator 12 und hülsenförmigen Gehäuseteil 20 ragt. An den hülsenförmigen Rotorteil 32 sind ein ringscheibenförmiger Rotorteil 34 und ein Nabenteil 36 angeformt. Der Nabenteil 36 sitzt auf der Welle 30 und ist durch eine Schraube 38 an der Welle 30 festgeklemmt.

Die Welle 30 ist über ein Kardangelenk 40 mit einem Kreiselrotor 42 verbunden. Das Kardangelenk 40 ist nach Art der oben erwähnten DE-C2-32 13 720 ausgebildet und daher hier nicht näher beschrieben. Der Kreiselrotor 42 weist einen Magnetring 44 auf. Der Magnetring 44 wirkt mit Drehmomenterzeugern zusammen, von denen in Fig. 1 nur der Drehmomenterzeuger 46 erkennbar ist. Der Drehmomenterzeuger sitzt auf einem Kragen 50, der sich in einen Ringraum des Rotors 42 erstreckt. Auf der ringscheibenförmigen Trennwand des Gehäuses 10 sitzen Abgriffe, von denen in Fig.1 nur ein Abgriff 52 erkennbar ist. Die Abgriffe sprechen auf Winkelauslenkungen um jeweils eine von zwei zueinander senkrechten Eingangsachsen an. Abgriff 52 spricht an auf Auslenkungen des Kreiselrotors 42 um eine zur Papierebene in Fig.1 senkrechte Eingangsachse.

Die Drehrichtung des Antriebsmotors 14 ist durch eine an sich bekannte und daher hier nicht im einzelnen dargestellte Umschalteinrichtung 56 umkehrbar.

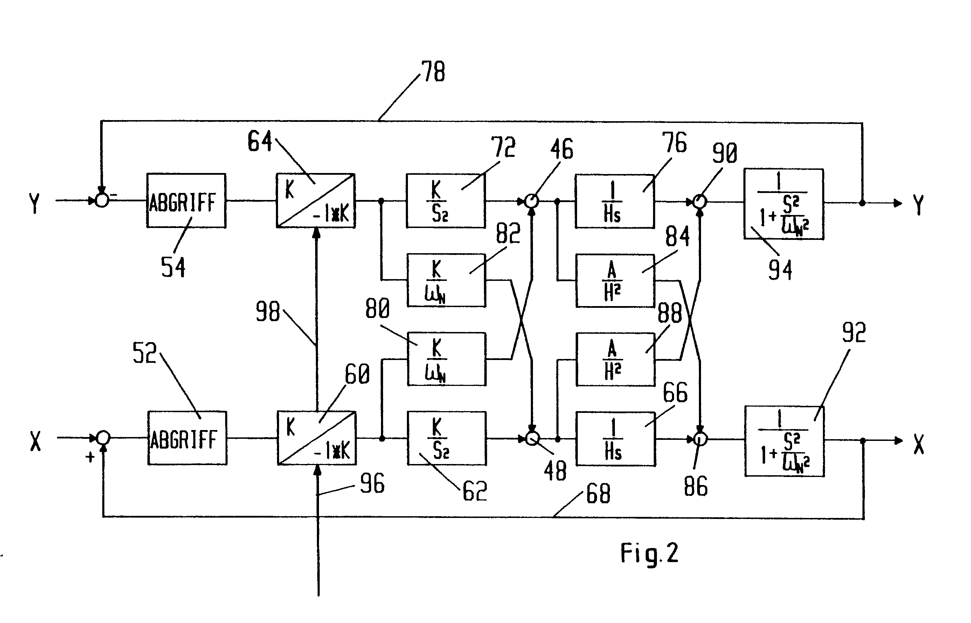

Fig.2 zeigt als Blockdiagramm die elektrische Fesselung des Kreiselrotors 42 an seine Mittellage.

Auslenkungen des Kreiselrotors 42 um eine erste Eingangsachse, die X-Achse, die hier senkrecht zur Papierebene in Fig.1 verläuft, werden durch den Abgriff 52 erfaßt und in ein entsprechendes elektrisches Signal umgesetzt. Dieses Signal wird auf den Drehmomenterzeuger 48 geschaltet, der auf den Kreiselrotor 42 ein Drehmoment um die in der Papierebene von Fig.1 verlaufende zweite Eingangsachse, die Y-Achse, erzeugt.

Das Abgriffsignal des Abgriffs 52 wird durch einen Verstärker 60 mit dem dem Verstärkungsfaktor $K_1$ verstärkt. Das verstärkte Abgriffsignal ist dann auf einen weiteren integrierenden Verstärker 62 mit einer Übertragungsfunktion $K_2/s$ geschaltet. Das Ausgangssignal dieses integrierenden Verstärkers 62 beaufschlagt den um die Y-Achse wirksamen Drehmomenterzeuger 48. Der Drehmomenterzeuger 48 übt auf den Kreiselrotor 42 ein Drehmoment aus. Das bewirkt eine Präzession des Kreiselrotors 42 aus seiner Mittellage um die X-Achse. Die Geschwindigkeit dieser Präzession ist umgekehrt proportional zum Kreiseldrall H. Das ist in dem Blockdiagramm durch Block 66 mit der Übertragungsfunktion 1/Hs dargestellt Darin ist s, wie üblich, die Variable der Laplace-Transformierten. Es resultiert ein durch das Drehmoment hervorgerufene Auslenkung um die X-Achse, die der vom Abgriff 52 erfaßten Auslenkung entgegenwirkt und den Kreiselrotor wieder in seine Mittellage zurückführt. Das ist in dem Blockdiagramm durch die Rückführschleife 68 dargestellt.

Das Abgriffsignal des Abgriffs 54 wird durch einen Verstärker 70 mit dem dem Verstärkungsfaktor $K_1$ verstärkt. Das verstärkte Abgriffsignal ist dann auf einen weiteren integrierenden Verstärker 72 mit einer Übertragungsfunktion $K_2/s$ geschaltet. Das Ausgangssignal dieses integrierenden Verstärkers 72 beaufschlagt den um die X-Achse wirksamen Drehmomenterzeuger 46. Der Drehmomenterzeuger 46 übt auf den Kreiselrotor 42 ein Drehmoment aus. Das bewirkt eine Präzession des Kreiselrotors 42 aus seiner Mittellage um die Y-Achse. Die Geschwindigkeit dieser Präzession ist umgekehrt proportional zum Kreiseldrall H. Das ist in dem Blockdiagramm durch Block 76 mit der Übertragungsfunktion 1/Hs dargestellt. Darin ist s, wie üblich, die Variable der Laplace-Transformierten. Es resultiert ein durch das Drehmoment hervorgerufene Auslenkung um die Y-Achse, die der vom Abgriff 54 erfaßten Auslenkung entgegenwirkt und den Kreiselrotor 42 wieder in seine Mittellage zurückführt. Das ist in dem Blockdiagramm durch die Rückführschleife 78 dargestellt.

Der Drehmomenterzeuger 46 ist zur Dämpfung von Nutationsschwingungen auch noch von dem Signal des Abgriffs 52 mit einem Faktor $K_3/\omega_N$ beaufschlagt, wobei $\omega_N$ die Nutationsfrequenz ist. In entsprechender Weise ist der Drehmomenterzeuger 48 zur Dämpfung von Nutationsschwingungen auch von dem Signal des Abgriffs 54 mit diesem Faktor $K_3/\omega_N$ beaufschlagt. Das ist durch Blöcke 80 bzw. 82 dargestellt. Die Verarbeitung der Abgriffsignale und die Erzeugung der Ströme in den Drehmomenterzeugern erfolgt zweckmäßigerweise so, daß die Signale der Abgriffe 52 und 54 digitalisiert, digital verarbeitet und dann in analoge Ströme zurückgewandelt werden, wie das z.B. in der oben erwähnten EP-A2-0 251 157 beschrieben ist.

Das Drehmoment des um die X-Achse wirkenden Drehmomenterzeugers 46 beeinflußt auch die Auslenkung des Kreiselrotors 42 um die X-Achse. Das ist durch die Querverbindung mit Block 83 dargestellt, der die Überlagerung des Drehmoments des Drehmomenterzeugers 46 mit einem Faktor $A/H^2$ über die durch die Präzession hervorgerufene Auslenkung im Summierpunkt 86 symbolisiert. In entsprechender Weise wirkt sich das Drehmoment des Drehmomenterzeugers 48 mit einem Faktor $A/H^2$ auf die Auslenkung des Kreiselrotors 42 um die Y-Achse aus. Das ist durch die Querverbindung mit dem Block 88 und den Summierpunkt 90 dargestellt, der die Überlagerung dieser Auslenkung zu der durch die Präzession bedingten Auslenkung des Kreiselrotors 42 repräsentiert. Die resultierende Auslenkung, welche den Kreiselrotor 42 in seine Mittellage zurückführt, ergibt sich aus diesen beiden überlagerten Auslenkungen, die mit einer Übertragungsfunktion

$$\frac{1}{1 + s^2 / \omega_N^2}$$

wirksam werden. Das ist in Fig.2 durch Blöcke 92 bzw. 94 dargestellt.

Wenn die Drehrichtung des Kreiselrotors zur Eliminierung von Kreiselfehlern umgekehrt wird, dann werden die Polaritäten der Signale der Abgriffe 52 und 54 umgekehrt. Das geschieht dadurch, daß der Faktor $K_1$ gemäß den Blöcken 60 und 64 durch ein Signal an Eingängen 96 bzw. 98 mit -1 multipliziert wird.

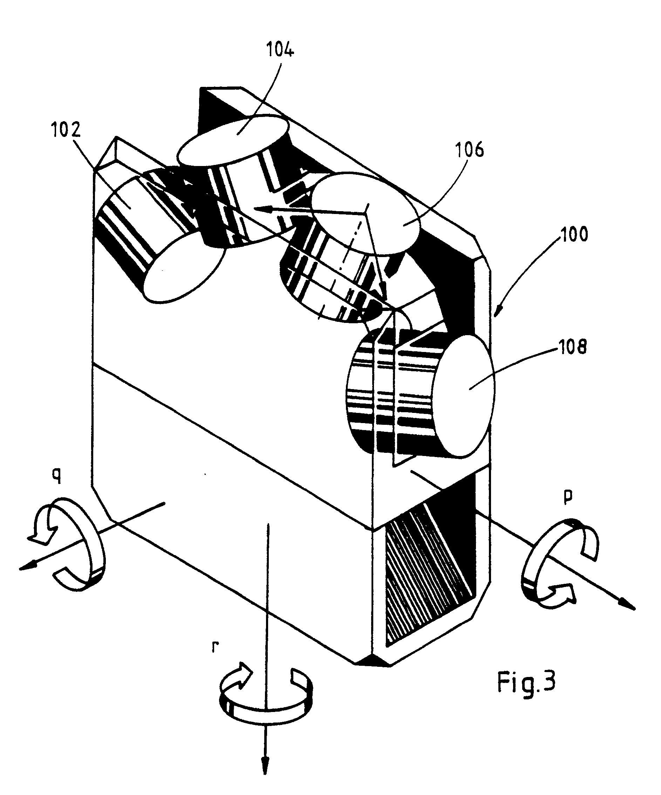

Der Kreisel gemäß Fig.1 und 2 ist Teil einer Kreiselbaugruppe 100, wie sie in Fig.3 dargestellt ist. Diese Kreiselbaugruppe 100 enthält vier Kreisel 102, 104, 106 und 108. Die Eingangsachsen der vier Kreisel sind, wie in der EP-A2-0 263 777 beschrieben ist, auf dem Mantel eines parallel zur Fahrzeugquerachse liegenden gedachten Kegels mit einem Öffnungswinkel von 90° angeordnet. Aus den Signalen, die von den verschiedenen Kreiseln 102, 104, 106 und 108 an den jeweils zwei Eingangsachsen erhalten werden, können die Winkelgeschwindigkeiten mehrfach redundant bestimmt werden. Eine -an sich mögliche- Drehung der gesamten Kreiselbaugruppe 100 um z.B. die $Z^F$-Achse zur Eliminierung von Kreiselfehlern ist unzweckmäßig, weil dann bei einem Ausfall des Drehmechanismus die gesamte Kreiselbaugruppe 100 trotz der mehrfachen Redundanz der Kreisel 102, 104, 106 und 108 ausfallen würde.

Aus diesem Grunde wird zur Eliminierung von Kreiselfehlern bei der Ausrichtung des Referenzsystems, in welchem die Kreiselbaugruppe angewandt wird, bei wenigstens einem der Kreisel die Drehrichtung des Kreiselrotors 42 in der beschriebenen Weise umgekehrt, während gleichzeitig die Polaritäten der Signale der Abgriffe 52 und 54 ebenfalls umgekehrt werden.

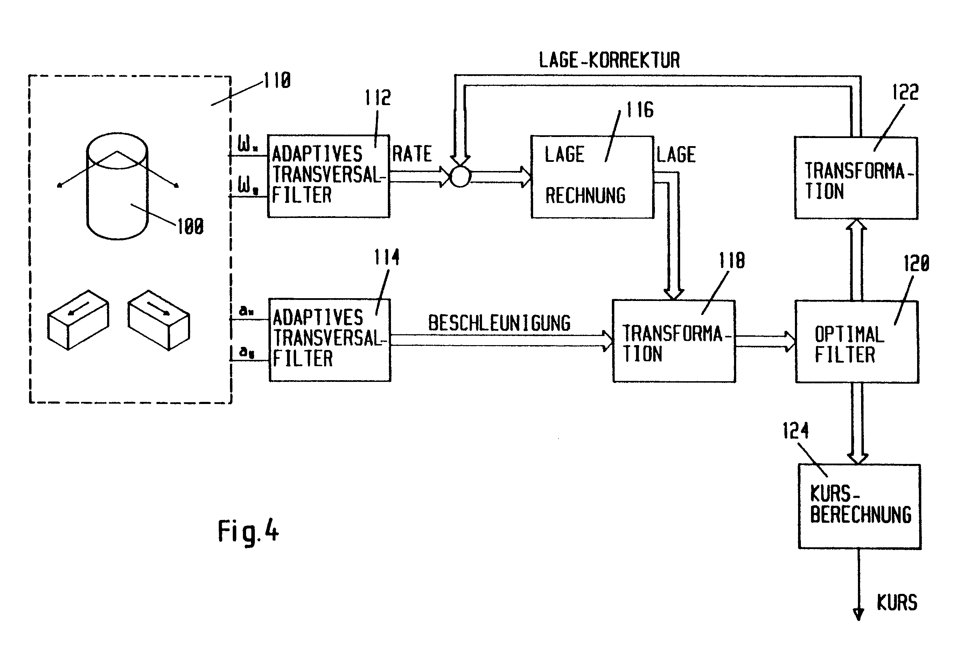

Die Ausrichtung eines mehrfach redundanten Referenzsystems mit einer Kreiselbaugruppe nach Fig.3 ist in der erwähnten EP-A2-0 263 777 beschrieben und in Fig.4 an einem Blockdiagramm dargestellt.

Eine Sensorbaugruppe 110, welche die Kreiselbaugruppe 100 nach Fig.3 und zusätzlich redundant vorgesehene (nicht dargestellte) Beschleunigungsmesser enthält, liefert zwei Winkelgeschwindigkeiten $\omega_x$ und $\omega_y$ sowie zwei Komponenten der Beschleunigung $a_x$ und $a_y$. Die Signale werden durch adaptive Transversalfilter 112 bzw. 114 gefiltert. Die adaptive Transversalfilter dienen zur Unterdrückung von Meßrauschen und Aliasingeffekten. Es ergibt sich ein zweidimensionaler Drehgeschwindigkeitsvektor. Aus dem Drehgeschwindigkeitsvektor wird, wie durch Block 116 dargestellt ist, eine Lageinformation erhalten. Mit dieser Lageinformation wird der ebenfalls erhaltene zweidimensionale Beschleunigungsvektor in ein bstimmtes mathematisches Bezugssystem transformiert. Das ist durch Block 118 dargestellt. In diesem Bezugssystem ist ein Optimalfilter 120 implementiert.

Das Optimalfilter 120 liefert einmal Korrektursignale, die, nach Rücktransformation in das ursprüngliche Bezugssystem gemäß Block 122 zur Korrektur der Lageinformation benutzt werden. Damit werden die Lagefehler vermindert und damit die Fehler in der Beschreibung des besagten mathematischen Bezugssystem. Zum anderen liefert das Optimalfilter 120 Schätzwerte für bestimmte Zustandsgrößen, aus denen in einer Signalverarbeitung 124 eine Kursinformation gewonnen werden kann. Die Kursinformation beschreibt die Orientierung des beschriebenen Referenzsystems in Bezug auf ein erdfestes Bezugssystem.

Bei dieser Feinausrichtung kann der eine der Kreisel, z.B. der Kreisel 106 einmal mit einer Drehrichtung des Kreiselrotors 42 und einer Polarität der Signale der Abgriffe 52 und 54 und das andere Mal mit der entgegengesetzten Drehrichtung und der entgegengesetzten Polarität der Signale der Abgriffe 52 und 54 betrieben werden. Damit kann das Optimalfilter 120 die Kreiseldrift schätzen und damit ihren Einfluß auf die Fehler der Kursberechnung in der Signalverarbeitung 124 erheblich vermindern.

Der Ablauf ist dabei folgender:

Der Kreiselrotor 42 wird zunächst mit einer ersten Drehrichtung betrieben. Die Abgriffe 52 und 54 werden mit einer ersten Polarität aufgeschaltet. Es erfolgt eine Grobausrichtung (ähnlich wie sie in der EP-A2-0 263 777 beschrieben ist) und anschließend eine Feinausrichtung wie oben beschrieben. Danach wird die Drehrichtung des Kreiselrotors 42 umgekehrt und mit einer entgegengesetzten zweiten Drehrichtung und einer entgegengesetzten zweiten Polarität der Abgriffe 52 und 54 eine erneute Feinausrichtung durchgeführt. Der hinsichtlich Kreiselfehlern korrigierte Kurswinkel ergibt sich dabei als Mittelwert der bei den beiden Feinausrichtungen ermittelten Kurswinkel.

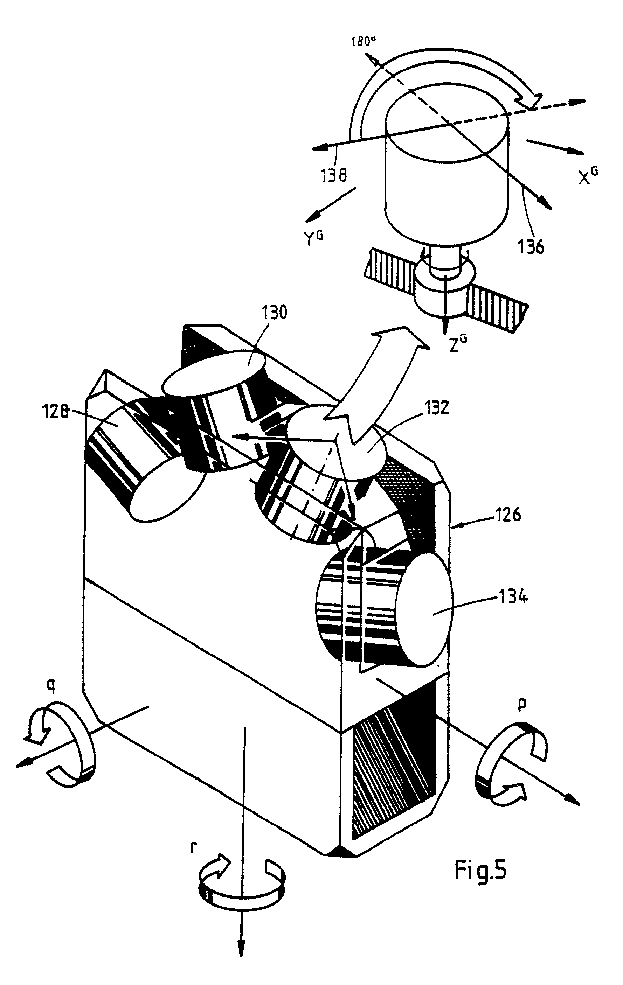

Eine abgewandelte Ausführung zeigt Fig.5. Bei der Ausführung nach Fig.5 erfolgt eine Verdrehung des Kreisels in verschiedene Stellungen. Es wird jedoch nicht die gesamte Kreiselbaugruppe 126 mit vier Kreiseln 128, 130, 132 und 134 verdreht, was die oben erwähnten Probleme mit sich bringen würde, sondern nur der Kreisel 134. Wie in Fig.5 oben dargestellt ist, kann dieser nacheinander in eine 0°-Stellung und eine 180°-Stellung verdreht werden. In der 0°-Stellung sind die beiden Eingangsachsen 136 und 138 des Kreisels 132 nach vorn rechts und vorn links in der Figur gerichtet. In der 180°-Stellung sind die Eingangsachsen 136 und 138 hinten links bzw, hinten rechts gerichtet. Das ist in Fig.5 gestrichelt dargestellt. Der Ablauf der Grob- und Feinausrichtung des Referenzsystems ist der gleiche wie es im Zusammenhang mit Fig. 3 und 4 beschrieben wurde. Es wird jedoch die erste Grob- und Feinausrichtung in der 180°-Stellung des Kreisels 132 durchgeführt und die zweite Feinausrichtung in der 0°-Stellung. Auf diese Weise ist der Kreisel 132 anschließend während des weiteren Betriebes mit seinen Eingangsachsen richtig zu den übrigen Kreiseln 128,130 und 134 ausgerichtet.

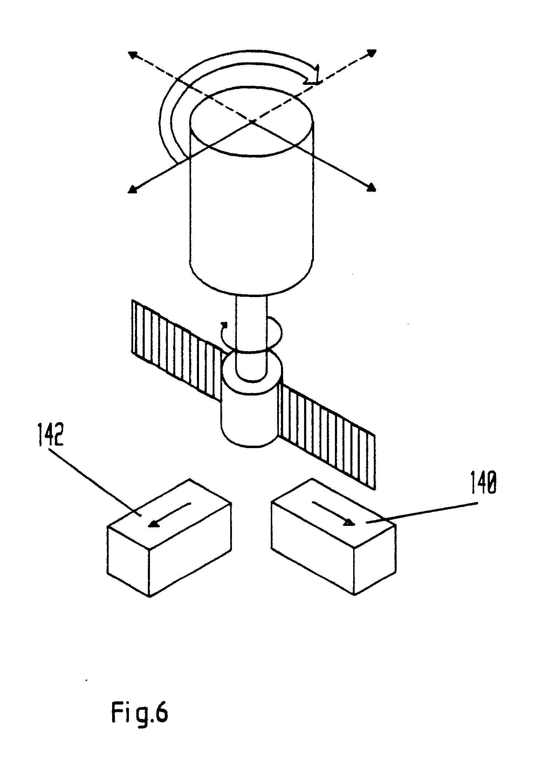

Wie in Fig.6 dargestellt ist, können auf dem mit dem Kreisel 132 verdrehbaren Teil auch die zugehörigen beiden Beschleunigungsmesser 140 und 142 angeordnet sein.

## Ansprüche

1.Verfahren zur Eliminierung von Kreiselfehlern bei elektrisch gefesselten, zweiachsigen Kreiseln, bei denen auf jeder Eingangsachse (X,Y) ein Abgriff (52,54) und ein Drehmomenterzeuger (46,48) angeordnet sind und jeder auf einer Eingangsachse angeordnete Abgriff (52,54) den auf der anderen Eingangsachse angeordneten Drehmomenterzeuger (48,46) beaufschlagt, **dadurch gekennzeichnet, daß**

(a) eine erste Messung bei einer ersten Drehrichtung des Kreiselrotors (42) erfolgt,

(b) anschließend bei einer zweiten Messung die Drehrichtung des Kreiselrotors (42) umgekehrt und gleichzeitig die Polarität der Signale der Abgriffe (52,54) umgeschaltet wird und

(c) ein Meßwert unter Benutzung der bei den beiden Messungen erhaltenen Kreiselsignale gebildet wird.

2. Verfahren nach Anspruch 1, **dadurch gegekennzeichnet, daß** nacheinander mehr als zwei Messungen mit unterschiedlichen Drehrichtungen des Kreiselrotors vorgenommen und der Meßwert aus allen so erhaltenen Kreiselsignalen gebildet wird.

3. Verfahren nach Anspruch 1, **dadurch gekennzeichnet, daß**

(a) die beiden Messungen jeweils die Feinausrichtung eines inertialen Referenzsystems umfassen, welche einen Kurswinkel liefert und

(b) der Mittelwert der bei den beiden Messungen erhaltenen Kurswinkel gebildet wird.

4. Verfahren nach Anspruch 2, **dadurch gekennzeichnet, daß**

(a) zu der Feinausrichtung aus den beiden von dem Kreisel gelieferten Winkelgeschwindigkeitssignalen eine Lage des Referenzsystems bestimmt und durch eine Richtungskosinusmatrix dargestellt wird,

(b) Signale zweier zu den Eingangsachsen des Kreisels ausgerichteter Beschleunigungsmesser unter Benutzung der Richtungskosinusmatrix in ein vorgegebenes, festes Bezugssystem transformiert werden zur Bildung von transformierten Beschleunigungssignalen,

(c) aus den transformierten Beschleunigungssignalen mittels eines Optimalfilters einmal Korrektursignale gebildet werden, die nach Rücktransformation eine Korrektur der aus den Winkelgeschwindigkeitssignalen ermittelten Lage des Referenzsystems bewirken, und zum anderen Schätzwerte von Zustandsgrößen, aus denen der Kurswinkel erhalten wird.

5. Vorrichtung zur Durchführung des Verfahrens nach Anspruch 1, enthaltend

(a) einen elektrisch gefesselten, zweiachsigen Kreisel, bei dem auf jeder Eingangsachse (X, Y) ein Abgriff (52,54) und ein Drehmomenterzeuger (46,48) angeordnet ist und jeder auf einer Eingangsachse angeordnete Abgriff (52,54) den auf der anderen Eingangsachse angeordneten Drehmomenterzeuger (48,46) beaufschlagt,

**gekennzeichnet durch**

(b) Mittel (56) zur Umkehrung der Drehrichtung des Kreiselrotors (42),

(c) Mittel (96,98) zur Umkehrung der Polarität der Signale der Abgriffe gleichzeitig mit der Umkehrung der Drehrichtung des Kreiselrotors und

(d) Mittel zur Bildung eines inertialen Meßwertes unter Eliminierung von Kreiselfehlern aus den bei den beiden Drehrichtungen des Kreisels erhaltenen, von den Drehgeschwindigkeiten um die Eingangsachsen bestimmten Ausgangssignalen des Kreisels.

6. Vorrichtung nach Anspruch 5, **dadurch gekennzeichnet, daß**

(a) der Kreisel (106) Teil eines inertialen Referenzsystems ist, welches zwei Beschleunigungsmesser enthält, die nach den Eingangsachsen des Kreisels ausgerichtet sind, und

(b) die Mittel zur Bildung eines inertialen Meßwertes

--Mittel (116) ( zur Bestimmung der Lage des Referenzsystems aus den von dem Kreisel (106) gelieferten Drehgeschwindigkeitssignalen enthalten sowie

--Transformationsmittel (118) zur Transformation der Signale der beiden Beschleunigungsmesser in transformierte Beschleunigungssignale, die auf ein vorgegebenes, festes Bezugssysten bezogen sind,

--ein Optimalfilter (120), auf welches die transformierten Beschleunigungssignale aufgeschaltet sind zur Erzeugung von Korrektursignalen einerseits und von Zustandsgrößen andererseits,

--Mittel (122) zur Rücktransformation der Korrektursignale und zur Erzeugung von Signalen, die auf die lagebestimmenden Mittel (116) aufgeschaltet sind und die von diesen bestimmte Lage des Referenzsystems korrigieren, und

--Mittel (124) zur Bestimmung eines Kurswinkels aus den von dem Optimalfilter (120) gelieferten Zustandsgrößen, und

(c) Mittel zur Bildung des Mittelwertes der bei der einen und bei der anderen Drehrichtung des Kreiselrotors (42) erhaltenen Kurswinkel.

7. Vorrichtung nach Anspruch 6, **dadurch gekennzeichnet, daß** der Kreisel Tei 1 einer Kreiselanordnung mit einer Mehrzahl von redundant vorgesehenen Kreiseln ist, von denen aber nur der eine Kreisel zur Eliminierung von Kreiselfehlern in seiner Drehrichtung und in der Polarität der Signale der Abgriffe umkehrbar ist.

8. Redundantes inertiales Referenzsystem, enthaltend eine Mehrzahl von zweiachsigen Kreiseln, die in einer Kreiselbaugruppe zusammengefasst sind und aus deren Signalen ein inertialer Meßwert ( gebildet wird, **dadurch gekennzeichnet, daß**

(a) einer der Kreisel (106) der Kreiselbaugruppe (100) gegenüber der Kreiselbaugruppe (100) um seine Drallachse um 180° aus einer ersten Stellung in eine zweite Stellung verdrehbar ist, und

(b) Mittel zur Bildung des inertialen Meßwertes in der ersten und in der zweiten Stellung des Kreisels vorgesehen sind sowie

(c) Mittel zur Bildung eines dem inertialen Meßwert entsprechenden, hinsichtlich Kreiselfehlern kompensierten Ausgangssignals aus den in den beiden Stellungen des Kreisels gebildeten Werten des besagten inertialen Meßwertes.

9. Vorrichtung nach Anspruch 8, **dadurch gekennzeichnet, daß** der inertiale Meßwert ein Kurssignal ist.

10. Vorrichtung nach Anspruch 9, **dadurch gekennzeichnet daß**

(a) der Kreisel (106) Teil eines inertialen Referenzsystems ist, welches zwei Beschleunigungsmesser enthält, die nach den Eingangsachsen des Kreisels ausgerichtet sind, und

(b) die Mittel zur Bildung eines inertialen Meßwertes

--Mittel (116) zur Bestimmung der Lage des Referenzsystems aus den von dem Kreisel (106) gelieferten Drehgeschwindigkeitssignalen enthalten sowie

--Transformationsmittel (118) zur Transformation der Signale der beiden Beschleunigungsmesser in transformierte Beschleunigungssignale, die auf ein vorgegebenes, festes Bezugssystem bezogen sind,

--ein Optimalfilter (120), auf welches die transformierten Beschleunigungssignale aufgeschaltet sind zur Erzeugung von Korrektursignalen einerseits und von Zustandsgrößen andererseits,

--Mittel (122) zur Rücktransformation der Korrektursignale und zur Erzeugung von Signalen, die auf die lagebestimmenden Mittel (116) aufgeschaltet sind und die von diesen bestimmte Lage des Referenzsystems korrigieren, und

--Mittel (124) zur Bestimmung eines Kurswinkels aus den von dem Optimalfilter (120) gelieferten Zustandsgrößen, und

(c) Mittel zur Bildung des Mittelwertes der bei der einen und bei der anderen Drehrichtung des Kreiselrotors (42) erhaltenen Kurswinkels.

Fig.1

EP 0 414 057 A2

Fig.2

Fig.3

Fig.4

Fig.5

Fig.6